(19) Europäisches Patentamt

European Patent Office

Office européen des brevets

(11) **EP 4 339 835 A1**

(12) **EUROPEAN PATENT APPLICATION**

(43) Date of publication:
**20.03.2024 Bulletin 2024/12**

(21) Application number: **22196191.5**

(22) Date of filing: **16.09.2022**

(51) International Patent Classification (IPC):
*G06N 3/02* (2006.01)    *G06N 3/04* (2023.01)
*G06N 3/08* (2023.01)    *G06N 20/00* (2019.01)
*G06V 10/82* (2022.01)    *G06F 21/10* (2013.01)
*G06F 21/55* (2013.01)    *G06F 21/60* (2013.01)
*H04L 9/40* (2022.01)    *H04W 12/10* (2021.01)
*H04W 12/12* (2021.01)

(52) Cooperative Patent Classification (CPC):
**G06N 3/04; G06N 3/02; G06N 3/08; G06N 5/01;
G06N 20/00; G06V 10/82;** G06F 21/10;
G06F 21/55; G06F 21/60; G06N 20/20; H04L 63/04;
H04L 63/14; H04W 12/10; H04W 12/12

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Irdeto B.V.**
**2132 LS  Hoofddorp (NL)**

(72) Inventors:
• **DURAND, Robert**
 **2132 LS Hoofddorp (NL)**
• **EISEN, Philip**
 **2132 LS Hoofddorp (NL)**
• **HICKIE, Thomas**
 **2132 LS Hoofddorp (NL)**

(74) Representative: **Boult Wade Tennant LLP**
**Salisbury Square House**
**8 Salisbury Square**
**London EC4Y 8AP (GB)**

(54) **MACHINE LEARNING MODEL PROTECTION**

(57)    A machine learning model protection method comprising: generating, based on a set of parameters that define a machine learning model, an item of software which, when executed by one or more processors, provides an implementation for the machine learning model; and applying one or more software protection techniques to the item of software.

FIGURE 3

EP 4 339 835 A1

**Description**

**Field of the invention**

The present invention relates to machine learning model protection methods, and systems and computer programs for carrying out such methods.

**Background of the invention**

Machine learning (ML) is a well-known field of technology - see, for example, https://en.wikipedia.org/wiki/Machine_learning, the entire contents of which are incorporated herein by reference. In ML, a computational model or algorithm is 'learned' based on data, as opposed to being explicitly programmed by a programmer. This learning (or derivation or fitting or training) of a model may be achieved using a number of well-known ML algorithms, such as backpropagation - see, for example, https://en.wikipedia.org/wiki/Backpropagation, the entire contents of which are incorporated herein by reference.

A model derived using an ML algorithm is typically referred to as an "ML model". There are many types of ML model such as: neural networks, support vector machines, decision trees, random forests, etc. - see, for example, https://en.wikipedia.org/wiki/Neural_network, https://en.wikipedia.org/wiki/Support-vector_machine, https://en.wikipedia.org/wiki/Decision_tree, and https://en.wikipedia.org/wiki/Random_forest respectively, the entire contents of which are incorporated herein by reference.

Many systems exist for designing or generating an ML model - see, for example (a) Keras (https://en.wikipedia.org/wiki/Keras, the entire contents of which are incorporated herein by reference) which makes use of the TensorFlow library (https://en.wikipedia.org/wiki/TensorFlow, the entire contents of which are incorporated herein by reference) and (b) Torch (https://en.wikipedia.org/wiki/Torch_(machine_learning), the entire contents of which are incorporated herein by reference).

An ML model may be represented as, or defined by, a set of parameters (referred to herein as a "parameter file"). The parameter file generally comprises data that specify or indicate the particular characteristics (or properties or configuration) of the ML model - i.e. the parameter file comprises data that define or specify the ML model. This may include data that specify one or more of (a) a type of the ML model; (b) some or all of the structure of/for the ML model; (c) one or more values to be used by the ML model when processing data (e.g. values for configuring such a structured ML model). For example, a neural network model may be represented as a parameter file that defines one or more of: the number and types of layers for the model; the number and types of neurons for the layers; respective activation functions for the neurons; connectivity, or links, between neurons; respective weights of links between neurons; respective biases for neurons; etc. Similarly, a parameter file for a decision tree model may define one or more of: the nodes and links of the decision tree (e.g. decision nodes and leaf nodes); the nature of the respective decisions at decisions nodes; etc. A parameter file for a support vector machine model may define one or more of: hyperplanes for the support vector machine; kernel functions for the support vector machine; etc.

A parameter file may be stored as a data file - when required, the parameter file is loaded into memory by an ML system or framework (such as Keras, TensorFlow, Torch, etc.) that has instructions for performing the ML model in line with the parameters of the parameter file. Thus, the parameter file may be viewed as data interpretable by an ML framework software application to implement the ML model.

ML models are, by nature, highly susceptible to algorithmic analysis, and thus historically have been vulnerable to a broad spectrum of attacks, including both static attacks and dynamic attacks. Examples of such attacks include the embedding of malware, adversarial ML and reverse engineering. For example, in one known attack against a commercially deployed neural network model, attackers were able to extract neural network parameters from within an operating system. The attackers were then able to use the extracted neural network parameters to load the neural network model into a publicly available adversarial ML framework, which enabled the attackers to successfully perform automated attacks - see, for example, https://techcrunch.com/2021/08/18/apples-csam-detection-tech-is-under-fire-again/. In another known attack, attackers demonstrated how, without necessarily impacting a model's performance in a significant or detectable way, the susceptibility of ML model parameter files to manipulation makes it possible to hide malware within those files - see, for example https://arxiv.org/abs/2107.08590.

Attacks on an ML model are particularly problematic where the ML model is applied in a safety critical process such as medical diagnostics or object detection for autonomous vehicles.

**Summary of the invention**

It would, therefore, be desirable to be able to better protect ML models.

Therefore, according to a first aspect of the invention, there is provided a machine learning model protection method comprising: generating, based on a set of parameters that define a machine learning model, an item of software which, when executed by one or more processors, provides an implementation for the machine learning model; and applying one or more software protection techniques to the item of software.

In some embodiments, the item of software implements arithmetic operations as fixed-point operations. In some such embodiments, the method comprises obtaining a user-defined precision for the fixed-point operations for use in said generating the item of software. Additionally or alternatively, the method comprises obtaining a user-defined specification for a number of bits for representing an input to and/or an output of the arithmetic operations.

In some embodiments, the machine learning model is representable, at least in part, as a plurality of nodes, each node having corresponding node functionality; and the item of software comprises a plurality of node functions, wherein each node function, when executed by the one or more processors, provides an implementation of the node functionality of a respective subset of the plurality of nodes. In some such embodiments, the respective subset of the plurality of nodes is a single node of the plurality of nodes. Additionally or alternatively, the machine learning model is a model for a neural network and each of the plurality of nodes is a respective neuron of the neural network. Additionally or alternatively, the machine learning model is a model for a decision tree a model or for a random forest, and each of the plurality of nodes is a respective node of the decision tree or of the random forest.

In some embodiments, the machine learning model is a support vector machine.

In some embodiments, the set of parameters are data interpretable by a machine learning framework software application to perform the machine learning model.

In some embodiments, the set of parameters specify one or more of: (a) a type of the machine learning model; (b) some or all of the structure of the machine learning model; (c) one or more values to be used by the machine learning model when processing data.

In some embodiments, generating the item of software comprises including, as part of the item of software, instructions which, when executed by the one or more processors, provide one or more security features in combination with the implementation for the machine learning model.

According to a second aspect of the invention, there is provided an apparatus arranged to carry out a method according to the above-discussed first aspect or any embodiment thereof.

According to a third aspect of the invention, there is provided a computer program which, when executed by one or more processors, causes the one or more processors to carry out a method according to the above-discussed first aspect or any embodiment thereof. The computer program may be stored on a computer-readable medium.

## Brief description of the drawings

Embodiments of the invention will now be described, by way of example only, with reference to the accompanying drawings, in which:

Figure 1 schematically illustrates an example of a computer system;
Figure 2 schematically illustrates an example of a system in which ML model protection is performed according to embodiments of the invention;
Figure 3 is a flowchart illustrating an example of an ML model protection method according to embodiments of the invention; and
Figure 4 schematically illustrates an example of a specific ML model, suitable for the well-known "XOR classification problem".

## Detailed description of embodiments of the invention

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

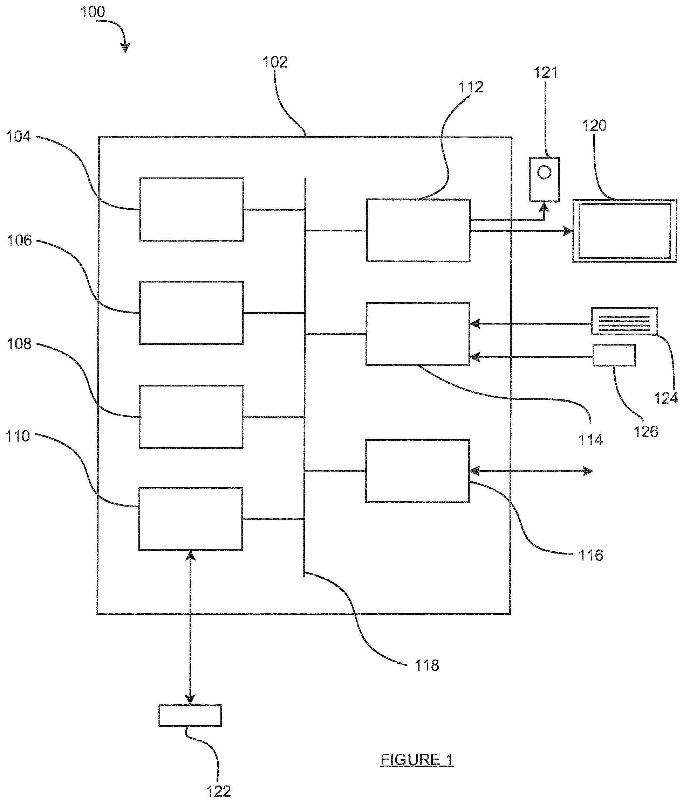

Figure 1 schematically illustrates an example of a computer system 100. The system 100 comprises a computer 102. The computer 102 comprises: a storage medium 104, a memory 106, a processor 108, an interface 110, a user output interface 112, a user input interface 114 and a network interface 116, which may be linked together over one or more communication buses 118.

The storage medium 104 may be any form of non-volatile data storage device such as one or more of a hard disk drive, a magnetic disc, a solid-state-storage device, an optical disc, a ROM, etc. The storage medium 104 may store an operating system for the processor 108 to execute in order for the computer 102 to function. The storage medium 104 may also store one or more computer programs (or software or instructions or code).

The memory 106 may be any random access memory (storage unit or volatile storage medium) suitable for storing data and/or computer programs (or software or instructions or code).

The processor 108 may be any data processing unit suitable for executing one or more computer programs (such as those stored on the storage medium 104 and/or in the memory 106), some of which may be computer programs according to embodiments of the invention or computer programs that, when executed by the processor 108, cause the processor 108 to carry out a method according to an embodiment of the invention and configure the system 100 to be a system according to an embodiment of the invention. The processor 108 may comprise a single data processing unit or multiple data processing units operating in parallel, separately or in cooperation with each other. The processor 108, in carrying out data processing operations for embodiments of the invention, may store data to and/or read data from the storage medium 104 and/or the memory 106.

The interface 110 may be any unit for providing an interface to a device 122 external to, or removable from, the computer 102. The device 122 may be a data storage device, for example, one or more of an optical disc, a magnetic disc, a solid-state-storage device, etc. The device 122 may have processing capabilities - for example, the device may be a smart card. The interface 110 may therefore access data from, or provide data to, or interface with, the device 122 in accordance with one or more commands that it receives from the processor 108.

The user input interface 114 is arranged to receive input from a user, or operator, of the system 100. The user may provide this input via one or more input devices of the system 100, such as a mouse (or other pointing device) 126 and/or a keyboard 124, that are connected to, or in communication with, the user input interface 114. However, it will be appreciated that the user may provide input to the computer 102 via one or more additional or alternative input devices (such as a touch screen). The computer 102 may store the input received from the input devices via the user input interface 114 in the memory 106 for the processor 108 to subsequently access and process, or may pass it straight to the processor 108, so that the processor 108 can respond to the user input accordingly.

The user output interface 112 is arranged to provide a graphical/visual and/or audio output to a user, or operator, of the system 100. As such, the processor 108 may be arranged to instruct the user output interface 112 to form an image/video signal representing a desired graphical output, and to provide this signal to a monitor (or screen or display unit) 120 of the system 100 that is connected to the user output interface 112. Additionally or alternatively, the processor 108 may be arranged to instruct the user output interface 112 to form an audio signal representing a desired audio output, and to provide this signal to one or more speakers 121 of the system 100 that is connected to the user output interface 112.

Finally, the network interface 116 provides functionality for the computer 102 to download data from and/or upload data to one or more data communication networks.

It will be appreciated that the architecture of the system 100 illustrated in figure 1 and described above is merely exemplary and that other computer systems 100 with different architectures (for example with fewer components than shown in figure 1 or with additional and/or alternative components than shown in figure 1) may be used in embodiments of the invention. As examples, the computer system 100 could comprise one or more of: a personal computer; a server computer; a mobile telephone; a tablet; a laptop; a television set; a set top box; a games console; other mobile devices or consumer electronics devices; etc. Additionally, it is possible that some components of the computer system 100 are not located in the computer 102 and are, instead, part of a computer network connected to the computer 102 via the network interface 116. Additionally or alternatively, the computer system 100 may comprise multiple computers 102, e.g. in a network of computers such as a cloud system of computing resources.

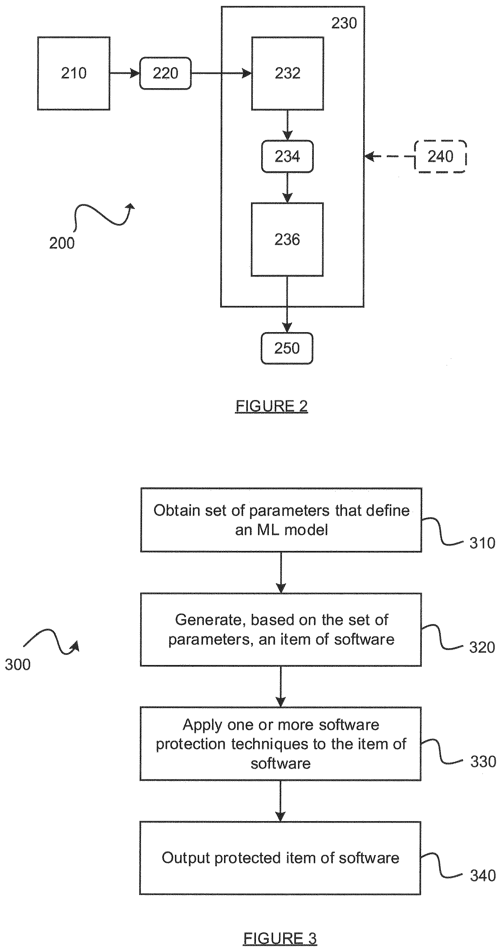

Figure 2 schematically illustrates an example of a system 200 in which ML model protection is performed according to embodiments of the invention. The system 200 comprises an ML model design system 210 and an ML model protection system 230. In summary, the ML model design system 210 generates, or outputs, a parameter file 220 that defines an ML model, and the ML model protection system 230 uses the parameter file 220 to generate a protected item of software 250 that provides an implementation for the ML model.

The ML model design system 210 and the ML model protection system 230 may each comprise respective software and/or hardware, and may be implemented using, for example, a computer system such as the computer system 100 of figure 1. In some embodiments, the ML model design system 210 and the ML model protection system 230 are operated by the same entity/user (and may, therefore, be implemented using the same computer system 100). In other embodiments, the ML model design system 210 and the ML model protection system 230 are operated by different entities/users, in which case the ML model design system 210 may transmit or provide the parameter file 220 to the ML model protection system 230, or the ML model protection system 230 may obtain or receive the parameter file 220 from the ML model design system 210, via any suitable communication mechanism, e.g. via a communication network (such as the Internet), not shown in figure 2. For example, the ML model protection system 230 may be operated by a service provider that provides ML protection services for customers who generate ML models using the ML model design system 210: the customer may provide the parameter file 220 for the ML model that they have designed to the service provider, and the service provider uses their ML model protection system 230 to generate, and provide back to the customer, the protected item of software 250. Such an ML protection service may, for example, be hosted as a web-based service or a cloud-based service.

The ML model design system 210 comprises software and/or hardware for designing (or fitting or generating or training) the ML model. As discussed above, such systems are well-known and include, for example, Keras and Torch. The ML model may be any type of ML model, such as a neural network model, a support vector machine model, a decision tree model, a random forest model, etc.

The output of the ML model design system 210 is the parameter file 220. The parameter file 220 represents the ML model that has been generated using the ML model design system 210 - i.e. the parameter file 220 is a set of parameters that define the ML model. The nature of parameter files has been discussed in detail above, and this applies equally to the parameter file 220. As discussed above, the parameter file may be used by an ML system or framework (not shown in figure 2) that has instructions for performing the ML model in line with the parameters specified by the parameter file - thus, the parameter file 220 is for loading into memory of a computer system for an ML framework (which could take the form of the system 100 of figure 1 with the memory 106) for interpretation by the ML framework to perform the ML model.

The ML model protection system 230 comprises a software generation module 232 and a software protection module 236.

The software generation module 232 is configured to obtain (or receive) the parameter file 220. The code generation module 232 is configured to generate an item of software 234 which, when executed by one or more processors, provides an implementation for the ML model (i.e. an implementation for the ML model defined by the parameter file 220). Example methods by which the code generation module 232 generates the item of software 234 are set out in more detail later.

The software protection module 236 is configured to generate the protected item of software 250 by applying one or more software protection techniques to the item of software 234. Example methods by which the software protection module 236 applies these one or more software protection techniques to the item of software 234 are set out in more detail later.

In some embodiments, the ML model protection system 230 may receive (or obtain) user configuration data 240 from a user or operator of the ML model protection system 230. The user configuration data 240 may be for controlling, at least in part, the operation or functionality of one or both of the software generation module 232 and the software protection module 236. Examples of this are set out in more detail later.

Figure 3 is a flowchart illustrating an example of an ML model protection method 300 according to embodiments of the invention, performed by the ML model protection system 230.

At a step 310, the method 300 comprises obtaining the set of parameters 220 that define an ML model, i.e. the parameter file 220 for the ML model. The parameter file 220 may have been generated by, or using, the ML model design system 210. The step 310 may comprise the ML model protection system 230 receiving the parameter file 220, e.g. from the ML model design system 210. The parameter file 220 may be received, for example, at an input interface (such as a webpage) and via a communication network (such as the Internet) - it will be appreciated, however, that the parameter file 220 may be communicated to the ML model protection system 230 via any suitable communication mechanism. Alternatively, the ML model protection system 230 may already have access to the parameter file 220 (e.g. if the parameter file 220 is stored in a memory or a medium accessible by the ML model protection system 230), in which case the step 310 may comprise the ML model protection system 230 reading or accessing the parameter file 220. It will, however, be appreciated that there are a variety of ways in which the ML model protection system 230 may obtain the parameter file 220.

At a step 320, the method 300 comprises the software generation module 232 generating, based on the set of parameters 220 that define the ML model, an item of software 234. As discussed above, this item of software 234, when executed by one or more processors, provides an implementation for this ML model.

The generated item of software 234 may be in any programming language, such as C or Java.

At the step 320, the software generation module 232 generates a set of instructions that forms at least a part of item of software 234. This set of instructions provides an implementation for the ML model defined by the set of parameters 220, but these instructions, at runtime, do not reference (e.g. from a memory or from a medium) or require a set of parameters that define the ML model. Thus, the set of instructions inherently implements (or represents or has embedded therein) the ML model/parameters - the set of instructions therefore does not, at runtime, need to read ML model parameters in order to perform the ML model. This is in contrast to, for example, traditional ML framework software applications (such as Keras or Torch), that perform an ML model simply by using their own instructions that, at runtime, read and interpret a set of parameters as data (e.g. from a memory or from a medium). Thus, while the software generation module 232 generates the item of software 234 based on the set of parameters 220, once the item of software 234 has been generated, the set of parameters 220 is no longer required for the item of software 234 to provide an implementation for the ML model because the item of software 234 does not reference the set of parameters 220 at runtime.

At a step 330, the method 300 comprises the software protection module 236 applying one or more software protection techniques to the item of software 234. Thus, the step 330 generates the protected item of software 250.

Examples of the processing at the step 330 are set out in more detail later.

At a step 340, the method 300 comprises outputting the protected item of software 250. For example, the step 340 may comprise the ML model protection system 230 locally storing/saving the protected item of software 250 for later use or provision to a user. The step 340 may comprise the ML model protection system 230 providing the protected item of software 250 to a user that initially provided the parameter file 220 (e.g. the user from whom the ML model protection system 230 initially obtained the parameter file 220 at the step 310). This may include transmitting the protected item of software 250 to a computer system of the user via any suitable communication mechanism, e.g. via a communication network (such as the Internet). For example, the method 300 may be performed by a service provider that provides ML protection services for customers who generate ML models. The ML model protection system 230 operated by the service provider may obtain (at the step 310) the parameter file 220 from a customer (e.g. via a webpage for the service), where the parameter file 220 is for an ML model that the customer has designed, and the service provider performs method 300 to generate, and provide back to the customer, the protected item of software 250. Such an ML protection service may, for example, be hosted as a web-based service or a cloud-based service.

The step 340 may comprise performing processing on the protected item of software 250 before the protected item of software 250 is output. For example, in some embodiments, the intention may be to output the protected item of software 250 as source code; however, in other embodiments, the intention may be to output the protected item of software 250 as executable code (e.g. as an software application, a loadable library, etc.), in which case the step 340 may involve one or more of compiling, linking, binding, optimizing, etc. in order to generate the protected item of software 250 in the intended output format.

Thus, by moving the representation of the ML model from the parameter domain (i.e. from being represented and stored as the parameter file 220), which an attacker may easily compromise, to the software domain (i.e. as being represented as the item of software 234 which may be the subject of one or more software protection techniques to yield the protected item of software 250), the functionality, secrecy and integrity of the ML model may be better protected.

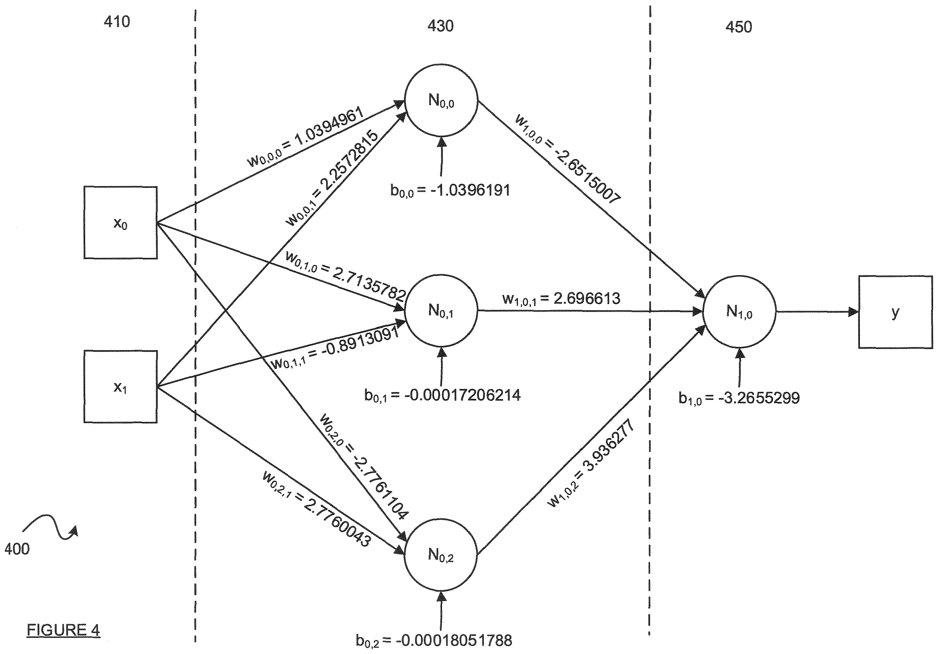

A simple example will help illustrate the method 300. Figure 4 schematically illustrates an example of a specific ML model, suitable for the well-known "XOR classification problem". The ML model of figure 4 is neural network 400. The neural network 400 comprises an input layer 410, a hidden layer 430 and an output later 450.

The input layer 410 has two inputs: $x_0$, $x_1$.

The hidden layer 430 has three neurons $N_{0,0}$, $N_{0,1}$ and $N_{0,2}$. For k=0,1,2 the neuron $N_{0,k}$ uses: (a) a respective weight $w_{0,k,0}$ and $w_{0,k,1}$ for the two inputs $x_0$ and $x_1$ (the weights being indicated along the arrows linking the inputs $x_0$ and $x_1$ to the neuron $N_{0,k}$); a respective bias $b_{0,k}$; and an activation function which, in this case, is the well-known ReLU function (where ReLU(z) outputs 0 if z<0 and z if z≥0).

Thus, in this example, (a) the neuron $N_{0,0}$ generates the output $a_{0,0}$ = ReLU( $1.0394961x_0$ + $2.2572815 x_1$ - 1.0396191 ); (b) the neuron $N_{0,1}$ generates the output $a_{0,1}$ = ReLU( $2.7135782x_0$ - $0.8913091x_1$ - 0.00017206214 ); and (c) the neuron $N_{0,2}$ generates the output $a_{0,2}$ = ReLU( $-2.7761104x_0$ + $2.7760043x_1$ - 0.00018051788 ).

The output layer 450 has one neuron $N_{1,0}$. The neuron $N_{1,0}$ uses: (a) a respective weight $w_{1,0,k}$ for the outputs $a_{0,k}$ of the neurons $N_{0,k}$ for k=0,1,2 (the weights being indicated along the arrows linking the $N_{0,0}$, $N_{0,1}$ and $N_{0,2}$ to the neuron $N_{1,0}$); a bias $b_{1,0}$; and an activation function which, in this case, is the well-known sigmoid function S (where $S(z)=1/(1+e^{-z})$). Thus, in this example, the neuron $N_{1,0}$ generates the output $a_{1,0}$ = S( $-2.6515007a_{0,0}$ + $2.696613a_{0,1}$ + $3.936277a_{0,2}$ - 3.2655299).

The output y of the neural network 400 may be set to the output $a_{1,0}$ of the neuron $N_{1,0}$, or may be the output $a_{1,0}$ with some further processing applied thereto (e.g. truncation, addition of random noise, etc.)

Annex 1 appended hereto is an example parameter file 220 that defines the neural network 400. As can be seen, there are parameters defining the structure of the neural network 400 (e.g. number of layers, number and type of neurons per layer, activation functions to use, etc.), as well as parameters defining the above-mentioned weights and biases.

Annex 2 appended herein provides example code/instructions (in the language C) for the item of software 234 generated at the step 320 based on the parameter file 220 of Annex 1. As can be seen, there is code for the functionality of the hidden layer 430, code for the functionality of the output layer 450, and code for the model itself (which takes input array x of size 2, and outputs a value y generated by calling the functions for the hidden layer 430 and the output layer 450).

To generate the item of software 234 at the step 320, the software generation module 232 may make use of one or more code templates. For example:

- Two example activation functions (ReLU and sigmoid) are used in the example neural network 400, as discussed above. As can be seen from the code in Annex 2, there are C functions for each of these activation functions. The software generation module 232 may have library of such functions, and may select the ones that are required (i.e. the activation functions that are specified by the parameter file 220) for inclusion as part of the item of software 234.

- As can be seen from the code in Annex 2, there are C functions for each of the neurons. The software generation module 232 may have a template C function for a neuron, e.g.
float layerPNeuronQ( float *x) {

```
    float neuronQ = 0;
    return neuronQ; }
```

The software generation module 232 may generate a C function for a particular neuron by populating such a template with (a) one or more instructions to create a weighted sum of the inputs to the neuron and the bias, based on the respective weights and bias specified by the parameter file 220 for that neuron, e.g. including following statements for the neuron $N_{0,0}$

```
    neuron0 = neuron0 + ( 1.0394961 * x[0]);
    neuron0 = neuron0 + ( 2.2572815 * x[1]);
    neuron0 = neuron0 + ( -1.0396191);
```

and (b) instructions to apply that neuron's activation function, based on the respective activation function specified by the parameter file 220 for that neuron e.g. including the following statement for the neuron $N_{0,0}$
neuron0 = layer0Activation( neuron0);

• As can be seen from the code in Annex 2, there is a C function executeModel for controlling the execution of the ML model. The software generation module 232 may have a template C function for this, e.g.
long* executeModel( long *x) {

```
    long *y = NULL;

    long *z = NULL;

    free(z);

    return y; }
```

The software generation module 232 may generate a C function for controlling the execution of the ML model by populating such a template with one or more instructions to perform the processing for each of the layers of the neural network, based on the layers specified by the parameter file 220, e.g. including the following statements for the particular neural network 400 of figure 4:

```
    z = x;
    y = layer0(z);
    z = y;
    y = layerl(z);
```

It will, of course, be appreciated that the software generation module 232 may adjust data types for the variables involved (e.g. if the input(s) and/or output(s) for the executeModel function are to be of type float instead of type long), with this being specified by the parameter file 220. For this, there may be templates functions for each data type, for selection and use by the software generation module 232, or the software generation module 232 may itself dynamically set the data types for the functions as the software generation module 232 is performing the step 320 to generate the code for the item of software 324.

It will also be appreciated that the software generation module 232 may include further code/instructions (e.g. code for one or more header files, code of one or more standard libraries, etc.) for the item of software 234.

Whilst the above example has been provided based on the ML model being for the neural network model 400 shown in figure 4, it will be appreciated that neural networks with different numbers/types of layers, different numbers/types of neurons, different connectivity between neurons, different weighs, different biases, different activation functions, etc. can be used and processed by the method 300. Moreover, whilst the above example has been provided based on the ML model being a neural network model, it will be appreciated that the software generation module 232 may perform corresponding functionality to generate the item of software 234 for other types of ML model (e.g. decision trees models, random forest models, support vector machines, etc.).

The example shown in figure 4 and Annexes 1 and 2 make use of floating point numbers and floating point operations (for arithmetic operations/functions) - see the data type float used in the C-code functions, and the specification of float32 in the example parameter file 220 in Annex 1. However, use of floating point numbers in the item of software 234 may sometimes complicate (or render less-effective or even preclude the user of) one or more of the software protection techniques that are applied at the step 330. For example, some software protection techniques rely on the use of look-up tables to help hide/obfuscate secret/sensitive information - this is difficult (or very inefficient) to implement with floating point numbers (given the size of the look-up tables that would need implementing and the resulting large memory and processing requirements). Moreover, some software protection techniques map data from one number domain/space/representation to another number domain/space/representation, and the use of floating point numbers/operations may not be compatible with, or may result in unpredictable or unacceptable errors when using, such domain mappings (particularly nonlinear mappings). Additionally, some software protection techniques rely on data being viewed as elements of a particular finite field in which finite field arithmetic is performed - this is difficult (or very inefficient) to implement with floating point numbers (given the size of the finite field that would otherwise be required).

Consequently, in some embodiments of the invention, the step 320 comprises implementing arithmetic operations of the item of software 234 as fixed-point operations. This may comprise obtaining a user-defined precision for the fixed-point operations for use in the item of software 234 - such user-defined precision may, for example, be specified as part of the user configuration 240. Such user-defined precision may specify a number of bits for representing an input to and/or an output of the arithmetic operations.

Implementing the item of software 234 in this way (i.e. implementing arithmetic operations of the item of software 234 as fixed-point operations) may sometimes result in a different output from that implementation relative to an implementation in which floating point operations had been used instead. The item of software 234 is, however, still an implementation for the ML model specified by the parameter file 220 - it is just an implementation in which a fixed precision has been used for the variables and arithmetic operations. One could view the fixed-point item of software 234 as implementing a second ML model that has substantially the same effect as the ML model defined by the floating point parameter file 220. For any given input, the output of the second ML model may not be identical to the output of the ML model defined by the floating point parameter file 220, with the difference in output dependent on the precision specified for the fixed point operations. However, such difference will be very small, so that the relative accuracy of the second ML model, or the agreement between the two models, remains high. Thus, implementing arithmetic operations of the item of software 234 as fixed-point operations still provides an effective implementation for the ML model specified by the parameter file 220. In some embodiments, the step 320 may be performed multiple times, using different fixed point precisions, with the respective levels of agreement between the resulting fixed point items of software 234 and a floating point item of software 234 being measured (e.g. using a test data set as inputs to these items of software 234), so that a fixed point precision that results in at most a threshold difference between the corresponding fixed point item of software 234 and the floating point item of software 234 can be determined and used for the floating point item of software 234 output from the step 320 for the input to the step 330.

Methods of implementing arithmetic operations using fixed point data and operations, and methods of converting floating point numbers to fixed point numbers, are well-known. Thus, for example, the step 234 may comprise converting one or more floating point numbers specified by the parameter file 220 to corresponding fixed point numbers.

Implementation of some functions, such as a summation/accumulator or the well-known Softmax activation function, using fixed point operations can sometimes cause fixed point number representations to "overflow" - that is to say, the numbers can become too large to store in memory using a fixed point representation. The software generation module 232 may, therefore, be arranged to identify such functions and, when generating instructions for the item of software 234 to implement such an identified function, additionally include instructions in the item of software 234 that cause a scaling factor to be applied to the operands of the identified function which will prevent such an overflow.

For example, Annex 3 appended herein provides example code/instructions (in the language C) that can be used in the item of software 234, for a function fpSafeSum for performing a fixed point accumulator that avoids overflows. In particular, the input is a vector x that has xSize elements. The summation is a recursive process - it repeats until a state is reached where no more overflows are detected. The recursive loop involves successively adding each element of x together. At each addition, a check is made for the occurrence of an overflow. An overflow may be detected by checking for an unintended change in sign - in particular: (i) if two positive numbers are added together but the sum of them is negative, then an overflow occurred; or (ii) if two negative numbers are added together but sum of them is positive, then an overflow occurred. If an overflow is detected, then (a) the current successive addition of elements of x together is stopped; (b) all of the elements of x are scaled down by a fixed amount which, in the example given in Annex 3, this involves scaling each element down by division by 2 (which has the effect doing a "bit shift" i.e. a right shift of the bits of that element by 1, but preserving the sign (+ or -) of that element) - it will, however, be appreciated that other scaling factors could be used instead; and (c) the successive addition of each element of x together is restarted (from the beginning) as discussed above, but this time this successive addition is based on the scaled down elements of x.

Such a fixed-point accumulator could be used, for example, to help form the weighted sum of inputs and biases at a neuron, prior to performing that neuron's activation function. The fixed-point accumulator could, of course, be used for other purposes.

Annex 3 appended herein also provides example code/instructions (in the language C) that can be used in the item of software 234 for a function fpSafeSoftMax for performing a fixed point SoftMax function that avoids overflows. As it well-known, the SoftMax function takes a vector of K real values ($z_1$, $z_2$, ..., $z_K$) and outputs a vector with K elements, where the $i^{th}$ element is $e^{z_i} / \sum_{j=1}^{K} e^{z_j}$ . Thus, for the function fpSafeSoftMax the input is a vector x that has xSize elements. Now, there is a maximum value representable by the fixed point representation, and the log of this maximum value represents the largest value representable by the fixed point representation that could be exponentiated without incurring an overflow - in the example of Annex 3, this is explimit = 681389. Thus, the elements of x are checked to see whether exponentiating them would result in an overflow. This involves identifying the largest value, maxx, of the elements of x and if this largest value, maxx, is explimit or higher, then exponentiating one or more of the elements of x may cause an overflow. If this potential for overflow is detected, then: (a) fpSafeSoftMax computes a ratio (scaleFactor) by which the elements of x are to be adjusted to ensure that exponentiating those elements would not result in an overflow - in particular, scaleFactor = fpdiv (explimit, maxX) , where fpdiv is a fixed point division of explimit by maxx; and (b) the elements of x[i] of x are then multiplied by this scale factor to become x[i] = fpmul(x[i], scaleFactor), where fpmul is a fixed point multiplication of x[i] by scaleFactor (which, in this instance, will not overflow due to the derivation of scaleFactor). The elements of x are then exponentatied. The sum of these now-exponentiated elements of x is calculated using fpSafeSum (which, notably, will also scale these elements of x, if necessary, as discussed above to avoid overflows). The elements of x are then divided by this sum, to generate the output of fpSafeSoftMax.

It will be appreciated that other fixed point implementations of functions may be provided for use in the item of software 234, in an analogous manner.

As discussed above, there are various different kinds of ML model. Some ML models are representable, at least in part, as a plurality of nodes, each node having corresponding node functionality. For example, the ML model may be a model for a neural network, with each of the plurality of nodes then being a respective neuron of the neural network - see, for example, the ML model depicted in figure 4 as the neural network 400 that comprises a plurality of nodes, namely the neurons $N_{0,0}$, $N_{0,1}$, $N_{0,2}$ and $N_{1,0}$. As another example, the ML model may be a model for a decision tree, with each of the plurality of nodes then being a respective node of the decision tree (e.g. a leaf node or a decision/branch node). There are various ways in which the software generation module 232 may generate the instructions for the item of software 234 at the step 330 to implement such an ML model (there is, after all, a vast number of ways of implementing the same functionality in software). For example, one could simply implement the item of software 234 using a single function that has a sequence of instructions for the ML model - e.g. instead of using the set of functions layer0Activation, layer0Neuron0, layer0Neuron1, layer0Neuron2, layer0, layer1Activation, layer1Neuron0, layer1, executeModel as per Annex 1, it would be possible to have all of this functionality explicitly coded in a single function executeModel. Alternatively, one could implement the ML model functionality of a neural network using tensor operations. However, it will be appreciated that, compared to the small example illustrated in figure 4, real world ML models representable as a plurality of nodes usually have a vast number of nodes - e.g. real world neural network usually have many layers, with each layer having hundreds of thousands, or millions, of neurons linked in complex ways. If one were to implement such an ML model using a single function, or using tensor operations, then problems may be encountered - for example, a compiler may not be able to compile source code for such an item of software 234 and/or many software protection modules 236 are not able to process such complex source code for such an item of software (e.g. they run out of memory or fail to complete the protection in a reasonable amount of time).

With that in mind, for ML models that are representable, at least in part, as a plurality of nodes, each node having corresponding node functionality, some embodiments are arranged so that the software generation module 232 deliberately generates the item of software 234 so that the item of software 234 comprises a plurality of node functions, wherein each node function, when executed by one or more processors, provides an implementation of the node functionality of a respective subset of the plurality of nodes. For example, the item of software 234 set out in Annex 2 for the neural network 400 has functions layer0Neuron0, layer0Neuron1, layer0Neuron2, layer1Neuron0, i.e. a function for each of the neurons to implement the functionality of that neuron. This helps ensure that the above-mentioned issues are avoided. The respective subset of the plurality of nodes implemented by a single one of these functions may be several nodes or a single node of the plurality of nodes. The more nodes that are implemented in a single function, the more likely it is that it will be harder for an attacker to successfully attack such a function (after the software protection techniques have been applied at the step 330), since the software protection techniques will have more data/code to work with to enable more complex protection and a higher degree of obfuscation for that function - however, as mentioned, the more nodes that are implemented by a single function, the more likely it is that problems may be encountered (such as with compilation or the ability to actually apply some software protection techniques). Therefore, in some embodiments, the maximum number of nodes that are implemented in a single function may be user-specified, e.g. as part of the user configuration 140.

Furthermore, in some embodiments, at the step 320, generating the item of software 234 may comprise including, as part of the item of software 234, instructions which, when executed by one or more processors, provide one or more security features in combination with the implementation for the ML model. The one or more security features are included in, or embedded in, the item of software 234 such that when, at the step 330, the software protection module 236 applies the one or more software protection techniques to the item of software 234, the one or more security features are protected in combination with the implementation for the ML model. In this way, the one or more security features may (after the application of the software protection techniques at the step 330) become entangled with the ML model so as to become difficult (or impossible) to separate from the ML model, thereby making it harder for an attacker to attack the ML model without at least one of the security features being affected and/or activated.

At least one of the one or more security features may comprise detection of whether the ML model is being "attacked" during execution of the item of software 234 (or the protected item of software 250). If an attack is detected, the feature may comprise performing a countermeasure, e.g. altering the behaviour of the ML model in such a way as to thwart, undermine or otherwise prevent a successful attack. For example:

- Such detection may comprise detecting a presence/use of one or more of diagnostic tools or other forms of tampering. For example, the software generation module 232 may include, as part of the item of software 234, anti-debugging instructions for detecting if a debugger or other diagnostic system is being used to monitor the ML model. Techniques for performing such anti-debugging are well-known.
- Such detection may comprise monitoring one or more values used by, or the state of, the ML model (e.g. values of inputs to and/or outputs from and/or intermediate variables of the ML model) and/or monitoring the behaviour of the ML model. For example, the software generation module 232 may include, as part of the item of software 234, verification instructions for checking the integrity and/or source of data associated with, or processed by, the ML model. Techniques for performing such integrity verification are well-known.

Additionally or alternatively, at least one of the one or more security features may help reduce the attack surface of the ML model by minimizing an amount of information about the ML model that is shared with a user of the item of software 234 (or the item of software 250). For example, a security feature may comprise modifying (or altering or cloaking) the output of the ML model. An example of such a modification, for an ML model for solving a classification problem, comprises presenting class membership as a Boolean (e.g. 'face' or 'not face') as opposed to a class probability (e.g. 90% probability that this is a face). Another example of such a modification, for an ML model solving a classification problem, comprises reporting an modified confidence result for the output of the ML model (e.g. reporting 75% confidence when the calculated confidence is 90%). Such modifications are particularly effective against adversarial ML attacks, which often involve analyzing the output of an ML model for a given input and using the information gleaned to construct an attack.

The specific features of the one or more security features may be selected based on the type of ML model and/or the intended deployment of the ML model. For example, if the ML model is a neural network, and the neural network is intended to be deployed in a cloud environment then, for example, anti-debugging technologies may not be included as features of the one or more security features. The selection of which security features to include (or to not include) may be made by a user, e.g. the selection may be specified by the user configuration 140.

Turning to the step 330, the aim of the software protection module 236 is to protect the functionality or data processing of the item of software 234 and/or to protect data used or processed by the item of software 234. This can be achieved by applying cloaking techniques such as homomorphic data transformation, control flow transformation, white box cryptography, key hiding, program interlocking and boundary blending.

In particular, the protected item of software 250 (i.e. after processing by the software protection module 236) will provide the same functionality or data processing as the item of software 234 (i.e. before such processing) - however, this functionality or data processing may be implemented in the protected item of software 250 in a manner such that an attacker with access to the protected item of software 250 cannot access or use this functionality or data processing in an unintended or unauthorised manner (whereas an attacker with access to the item of software 234 might have been able to access or use the functionality or data processing in an unintended or unauthorised manner). Similarly, the protected item of software 250 (i.e. after processing by the software protection module 236) may store or implement secret information (such as a cryptographic key) in a protected or obfuscated manner to thereby make it more difficult (if not impossible) for an attacker to deduce or access that secret information (whereas if an attacker were provided with the item of software 234, then the attacker might have been able to deduce or access that secret information). Thus, for example, the software protection techniques applied to the item of software 234 so as to generate the protected item of software 250 make it difficult, or impossible, for an attacker (who has access to the protected item of software 250) to identify/discover and/or modify the ML model (or the set of parameters that define the ML model).

For example:

- The item of software 234 may comprise a decision (or a decision block or a branch point) that is based, at least in part, on one or more items of data to be processed by the item of software 234. If the item of software 234 were accessible to an attacker in an unprotected form, then the attacker may be able to force the item of software 234 to execute so that a path of execution is followed after processing the decision even though that path of execution were not meant to have been followed. For example, the decision may comprise testing whether a program variable B is TRUE or FALSE, and the item of software 234 may be arranged so that, if the decision identifies that B is TRUE then execution path $P_T$ is followed/executed whereas if the decision identifies that B is FALSE then execution path $P_F$ is followed/executed. In this case, the attacker could (for example by using a debugger) force the item of software 234 to follow path $P_F$ if the decision identified that B is TRUE and/or force the item of software 234 to follow path $P_T$ if the decision identified that B is FALSE. Therefore, in some embodiments, the software protection module 236 aims to prevent (or at least make it more difficult) for the attacker to do this by applying one or more software protection techniques to the decision within the item of software 234. This could apply, for example, to decision nodes of a decision tree, or functions of a neuron of a neural network (e.g. when implementing a Softmax function).

- The item of software 234 may comprise one or more functions that involve the use of secret (or sensitive) data or that implement functionality in accordance with secret data. If an attacker were able to identify or determine the secret data, then a security breach may be considered to have occurred. Therefore, in some embodiments, the software protection module 236 aims to prevent (or at least make it more difficult) for the attacker to identify or determine the one or more pieces of secret data by applying one or more software protection techniques to such functions within the item of software 234. For example, keeping the various values in the functions layer0Neuron0, layer0Neuron1, layer0Neuron2, layer1Neuron0 of Annex 2 secret may be important, as otherwise an attacker may be able to inspect the software and identify the weights and biases for the neural network 400.

A "white-box" environment is an execution environment for an item of software in which an attacker of the item of software is assumed to have full access to, and visibility of, the data being operated on (including intermediate values), memory contents and execution/process flow of the item of software. Moreover, in the white-box environment, the attacker is assumed to be able to modify the data being operated on, the memory contents and the execution/process flow of the item of software, for example by using a debugger - in this way, the attacker can experiment on, and try to manipulate the operation of, the item of software, with the aim of circumventing initially intended functionality and/or identifying secret information and/or for other purposes. Indeed, one may even assume that the attacker is aware of the underlying algorithm being performed by the item of software. However, the item of software may need to use secret information, or implement functionality in accordance with secret information, where this information needs to remain hidden from the attacker. Similarly, it would be desirable to prevent the attacker from modifying the execution/control flow of the item of software, for example preventing the attacker forcing the item of software to take one execution path after a decision block instead of a legitimate execution path. There are numerous techniques, referred to herein as "white-box obfuscation techniques", for transforming the item of software 234 so that it is resistant to white-box attacks. Examples of such white-box obfuscation techniques can be found, in "White-Box Cryptography and an AES Implementation", S. Chow et al, Selected Areas in Cryptography, 9th Annual International Workshop, SAC 2002, Lecture Notes in Computer Science 2595 (2003), p250-270 and "A White-box DES Implementation for DRM Applications", S. Chow et al, Digital Rights Management, ACM CCS-9 Workshop, DRM 2002, Lecture Notes in Computer Science 2696 (2003), p1-15, the entire disclosures of which are incorporated herein by reference. Additional examples can be found in US61/055,694 and WO2009/140774, the entire disclosures of which are incorporated herein by reference. Some white-box obfuscation techniques implement data flow obfuscation - see, for example, US7350085, US7397916, US6594761 and US6842862, the entire disclosures of which are incorporated herein by reference. Some white-box obfuscation techniques implement control flow obfuscation - see, for example, US6779114, US6594761 and US6842862 the entire disclosures of which are incorporated herein by reference. However, it will be appreciated that other white-box obfuscation techniques exist and that embodiments of the invention may use any white-box obfuscation techniques.

As another example, it is possible that the item of software 234 may be intended to be provided (or distributed) to, and used by, a particular user device (or a particular set of user devices) and that it is, therefore, desirable to "lock" the item of software 234 to the particular user device(s), i.e. to prevent the item of software 234 from executing on another user device. Consequently, there are numerous techniques, referred to herein as "node-locking" protection techniques, for transforming the item of software 234 so that the protected item of software 250 can execute on (or be executed by) one or more predetermined/specific user devices but will not execute on other user devices. Examples of such node-locking techniques can be found in WO2012/126077, the entire disclosure of which are incorporated herein by reference. However, it will be appreciated that other node-locking techniques exist and that embodiments of the invention may use any node-locking techniques.

Digital watermarking is a well-known technology. In particular, digital watermarking involves modifying an initial digital object to produce a watermarked digital object. The modifications are made so as to embed or hide particular data (referred to as payload data) into the initial digital object. The payload data may, for example, comprise data identifying ownership rights or other rights information for the digital object. The payload data may identify the (intended) recipient of the watermarked digital object, in which case the payload data is referred to as a digital fingerprint - such digital watermarking can be used to help trace the origin of unauthorised copies of the digital object. Digital watermarking can be applied to items of software. Examples of such software watermarking techniques can be found in US7395433, the entire disclosure of which are incorporated herein by reference. However, it will be appreciated that other software watermarking techniques exist and that embodiments of the invention may use any software watermarking techniques.

It may be desirable to provide different versions of the item of software 250 to different users or user devices. The different versions of the item of software 250 provide the different user devices 250 with the same functionality - however, the different versions of the item of software 250 are programmed or implemented differently. This helps limit the impact of an attacker successfully attacking the protected item of software 250. In particular, if an attacker successfully attacks his version of the protected item of software 250, then that attack (or data discovered or accessed by that attack) may not be suitable for use with different versions of the protected item of software 250. Consequently, there are numerous techniques, referred to herein as "diversity" techniques, for transforming the item of software 234 so that different, protected versions of the item of software 250 are generated (i.e. so that "diversity" is introduced). Examples of such diversity techniques can be found in WO2011/120123, the entire disclosure of which are incorporated herein by reference. However, it will be appreciated that other diversity techniques exist and that embodiments of the invention may use any diversity techniques.

Runtime integrity verification is also well-known. Such integrity verification can be used to check that the data and/or control flow of an executing item of software has not been modified at runtime. Examples of this can be found in WO2018/108275 and WO2017/102880, the entire disclosure of which is incorporated herein by reference.

As another example, the attack surface of the ML model may be reduced by using one or more pruning techniques. Pruning techniques use analytical methods to determine whether certain operations are unnecessary (e.g. multiplying a value by 0 or 1), and then prevent performance of the operations determined to be unnecessary. In this way, the number of operations, and hence the size and execution requirements of the ML model are reduced, thus reducing the attack surface. These pruning techniques are particularly effective against attacks that intend to embed new functionality into the ML model.

The above-mentioned white-box obfuscation techniques, node-locking techniques, software watermarking techniques, diversity techniques, pruning techniques and runtime integrity verification are examples of software protection techniques. It will be appreciated that there are other methods of applying protection to an item of software 234. Thus, the term "software protection techniques" as used herein shall be taken to mean any method of applying protection to an item of software 234 (with the aim of thwarting attacks by an attacker, or at least making it more difficult for an attacker to be successful with his attacks), such as any one of the above-mentioned white-box obfuscation techniques and/or any one of the above-mentioned node-locking techniques and/or any one of the above-mentioned software watermarking techniques and/or any one of the above-mentioned diversity techniques.

There are numerous ways in which the software protection module 236 may implement the above-mentioned software protection techniques within the item of software 250. For example, to protect the item of software 234, the software protection module 236 may modify one or more portions of code within the item of software 234 and/or may add or introduce one or more new portions of code into the item of software 234. The actual way in which these modifications are made or the actual way in which the new portions of code are written can, of course, vary - there are, after all, numerous ways of writing software to achieve the same functionality.

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or one or more graphical processing units (GPUs), and/or other hardware arrangements. Method steps implemented in flowcharts contained herein, or as described above, may each be implemented by corresponding respective modules;

multiple method steps implemented in flowcharts contained herein, or as described above, may be implemented together by a single module.

It will be appreciated that, insofar as embodiments of the invention are implemented by a computer program, then one or more storage media and/or one or more transmission media storing or carrying the computer program form aspects of the invention. The computer program may have one or more program instructions, or program code, which, when executed by one or more processors (or one or more computers), carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, byte code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

### Annex 1 - Example parameter file 220

*First parameters that define the structure of the neural network 400*

```
{
        "class_name": "Sequential",
        "config":
        {
                "name": "sequential",
                "layers":
                [
                        {
                        "class_name": "InputLayer",
                        "config":
                        {
                                "batch_input_shape": [null, 2],
                                "dtype": "float32",
                                "sparse": false,
                                "ragged": false,
                                "name": "dense_input"
                        }
                },
                {
                        "class_name": "Dense",
                        config":
                        {
                                "name": "dense",
                                "trainable": true,
                                "batch_input_shape": [null, 2],
                                "dtype": "float32",
                                "units": 3,
                                "activation": "relu",
                                "use_bias": true,
                                "kernel_initializer":
                                {
                                        "class_name": "GlorotUniform",
                                        "config":
                                        {
                                                "seed": null
                                        }
                                },
                                "bias_initializer":
                                {
                                        "class_name": "Zeros",
                                        "config":
                                        {
                                        }
                                },
```

```
                              "kernel_regularizer": null,
                              "bias_regularizer": null,
                              "activity_regularizer": null,
                              "kernel_constraint": null,
                              "bias_constraint": null
                          }
                   },
                   {
                          "class_name": "Dense",
                          "config":
                          {
                              "name": "dense_1",
                              "trainable": true,
                              "dtype": "float32",
                              "units": 1,
                              "activation": "sigmoid",
                              "use_bias": true,
                              "kernel_initializer":
                              {
                                  "class_name": "GlorotUniform",
                                  "config":
                                  {
                                      "seed": null
                                  }
                              },
                              "bias_initializer":
                              {
                                  "class_name": "Zeros",
                                  "config":
                                  {
                                  }
                              },
                              "kernel_regularizer": null,
                              "bias_regularizer": null,
                              "activity_regularizer": null,
                              "kernel_constraint": null,
                              "bias_constraint": null
                          }
                   }
               ]
        },
        "keras_version": "2.4.0",
        "backend": "tensorflow"
    }
```

*Second parameters that define weights and biases for the hidden layer (with name* dense*)*

```
[<tf.Variable 'dense/kernel:0' shape=(2, 3) dtype=float32,
  numpy= array([[ 1.0394961,  2.7135782, -2.7761104],
                [ 2.2572815, -0.8913091,  2.7760043]], dtype=float32)>,
 <tf.Variable 'dense/bias:0' shape=(3,) dtype=float32,
  numpy=array([-1.0396191e+00, -1.7206214e-04, -1.8051788e-04],
  dtype=float32)>]
```

*Third parameters that define weights and biases for the output layer (with name* dense_1*)*

```
[<tf.Variable 'dense_1/kernel:0' shape=(3, 1) dtype=float32,
  numpy= array([[-2.6515007],
                [ 2.696613 ],
                [ 3.936277 ]], dtype=float32)>,
 <tf.Variable 'dense_1/bias:0' shape=(1,) dtype=float32,
  numpy=array([-3.2655299], dtype=float32)>]
```

**Annex 2 - Example code for item of software 234**

*C code for the hidden layer:*

```c
float layer0Activation( float x) {
        if (x > 0) return x; return 0;
}


float layer0Neuron0( float *x) {
        float neuron0 = 0;
        neuron0 = neuron0 + ( 1.0394961 * x[0]);
        neuron0 = neuron0 + ( 2.2572815 * x[1]);
        neuron0 = neuron0 + ( -1.0396191);
        neuron0 = layer0Activation( neuron0);
        return neuron0;
}


float layer0Neuron1( float *x) {
        float neuron1 = 0;
        neuron1 = neuron1 + ( 2.7135782 * x[0]);
        neuron1 = neuron1 + ( -0.8913091 * x[1]);
        neuron1 = neuron1 + ( -0.00017206214);
        neuron1 = layer0Activation( neuron1);
        return neuron1;
}


float layer0Neuron2( float *x) {
        float neuron2 = 0;
        neuron2 = neuron2 + ( -2.7761104 * x[0]);
        neuron2 = neuron2 + ( 2.7760043 * x[1]);
        neuron2 = neuron2 + ( -0.00018051788);
        neuron2 = layer0Activation( neuron2);
        return neuron2;
}


float* layer0( float*x) {
        // Inputs=2, Outputs=3
        // Dense, Activation=relu

        float *rez = (float *)malloc( sizeof( float) * 3);
        rez[0] = layer0Neuron0( x);
        rez[1] = layer0Neuron1( x);
        rez[2] = layer0Neuron2( x);
        return rez;
}
```

*C code for the output layer:*

```
float layer1Activation( float x) {
        return 1.0 / (1.0 + exp(-x));
}


float layer1Neuron0( float *x) {
        float neuron0 = 0;
        neuron0 = neuron0 + ( -2.6515007 * x[0]);
        neuron0 = neuron0 + ( 2.696613 * x[1]);
        neuron0 = neuron0 + ( 3.936277 * x[2]);
        neuron0 = neuron0 + ( -3.2655299);
        neuron0 = layer1Activation( neuron0);
        return neuron0;
}


float* layer1( float*x) {
        // Inputs=3, Outputs=1
        // Dense, Activation=sigmoid

        float *rez = (float *)malloc( sizeof( float) * 1);
        rez[0] = layer1Neuron0( x);
        return rez;
}
```

*C code for the model execution*

```
long* executeModel( long *x) {
        // Input type: long, length: 2
        // Output type: long, length: 1

        long *y = NULL;
        long *z = NULL;

        z = x;
        y = layer0(z);
        z = y;
        y = layer1(z);
        free(z);

        return y;
}
```

**Annex 3 - Example code for fixed point accumulator and SoftMax function**

*C code for a fixed point accumulator*

```c
long fpSafeSum( long *x, long xSize) {

        long sum = 0;
        int i = 0;
        long doOverflowSafeSum = 0;
        long didSumOverflow = 0;
        long tempSum = 0;

        doOverflowSafeSum = 1;
        while (1 == doOverflowSafeSum) {
            doOverflowSafeSum = 0; // Turn off repeat
            didSumOverflow = 0;
            sum = 0;

            // Compute the sum of x, and check for overflow
            for ( i = 0; i < xSize; i = i + 1) {
                tempSum = sum + x[i];

                // If adding positives results in a negative
                if ((sum > 0 && x[i] > 0) && tempSum < 0) {
                    didSumOverflow = 1;
                    break;
                }

                // If adding negatives results in a positive
                if ((sum < 0 && x[i] < 0) && tempSum > 0) {
                    didSumOverflow = 1;
                    break;
                }

                sum = tempSum;
            }

            // If an overflow occurred, scale it all back
            // and flag the while loop to run again
```

```
        if (didSumOverflow > 0) {
                doOverflowSafeSum = 1; // Run again
                for ( i = 0; i < xSize; i = i + 1) {
                        x[i] = x[i] / 2; // Sign preserving right shift
                }
        }
    }


    return sum;
}


C code for a fixed point SoftMax function
long fpSafeSoftMax( long *x, long xSize) {


    long maxX = 0;
    long scaleFactor = 0;
    long sum = 0;
    int i = 0;
    long explimit = 681389;


    // Find the largest value in x[i]
    maxX = x[0];
    for ( i = 0; i < xSize; i = i + 1) {
          if (x[i] > maxX)
                maxX = x[i];
    }


    // If the largest value will cause an overflow
    // in exp, scale all x[] down to avoid overflow.
    if (maxX >= explimit) {
          scaleFactor = fpdiv(explimit, maxX);
          for ( i = 0; i < xSize; i = i + 1) {
                x[i] = fpmul(x[i], scaleFactor);
          }
    }


    // Convert x[] into exp() of x
```

```
for ( i = 0; i < xSize; i = i + 1) {
        x[i] = fpexp(x[i]);
}

// Compute an overflow safe sum of x
sum = fpSafeSum(x, xSize)

// Normalize x by the sum
for ( i = 0; i < xSize; i = i + 1) {
        x[i] = fpdiv( x[i], sum);
}

return x;
}
```

**Claims**

1. A machine learning model protection method comprising:

   generating, based on a set of parameters that define a machine learning model, an item of software which, when executed by one or more processors, provides an implementation for the machine learning model; and applying one or more software protection techniques to the item of software.

2. The method of claim 1, wherein the item of software implements arithmetic operations as fixed-point operations.

3. The method of claim 2, comprising obtaining a user-defined precision for the fixed-point operations for use in said generating the item of software.

4. The method of claim 2 or claim 3, comprising obtaining a user-defined specification for a number of bits for representing an input to and/or an output of the arithmetic operations.

5. The method of any one of the preceding claims, wherein:

   the machine learning model is representable, at least in part, as a plurality of nodes, each node having corresponding node functionality; and
   the item of software comprises a plurality of node functions, wherein each node function, when executed by the one or more processors, provides an implementation of the node functionality of a respective subset of the plurality of nodes.

6. The method of claim 5, wherein the respective subset of the plurality of nodes is a single node of the plurality of nodes.

7. The method of claim 5 or 6, wherein the machine learning model is a model for a neural network and each of the plurality of nodes is a respective neuron of the neural network.

8. The method of claim 5 or 6, wherein the machine learning model is a model for a decision tree a model or for a random forest, and each of the plurality of nodes is a respective node of the decision tree or of the random forest.

9. The method of any one of claims 1 to 4, wherein the machine learning model is a support vector machine.

10. The method of any one of the preceding claims, wherein the set of parameters are data interpretable by a machine learning framework software application to perform the machine learning model.

11. The method of any one of the preceding claims, wherein the set of parameters specify one or more of:

(a) a type of the machine learning model;
(b) some or all of the structure of the machine learning model;
(c) one or more values to be used by the machine learning model when processing data.

12. The method of any one of the preceding claims, wherein generating the item of software comprises including, as part of the item of software, instructions which, when executed by the one or more processors, provide one or more security features in combination with the implementation for the machine learning model.

13. An apparatus arranged to carry out a method according to any one of claims 1 to 12.

14. A computer program which, when executed by one or more processors, causes the one or more processors to carry out a method according to any one of claims 1 to 13.

15. A computer-readable medium storing a computer program according to claim 14.

100

102

104

106

108

110

112

121

120

114

124

126

116

118

122

FIGURE 1

FIGURE 2

FIGURE 3

FIGURE 4

Europäisches
Patentamt

European
Patent Office

Office européen
des brevets

**EUROPEAN SEARCH REPORT**

Application Number

EP 22 19 6191

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/237268 A1 (NAKADA KENTO [JP] ET AL) 28 July 2022 (2022-07-28) <br> * figures 1-18 * <br> * paragraphs [0001] – [0010] * <br> * paragraphs [0035] – [0148] * <br> * paragraphs [0163] – [0282] * <br> * claims 1-20 * <br> ----- | 1-15 | INV. <br> G06N3/02 <br> G06N3/04 <br> G06N3/08 <br> G06N20/00 <br> G06V10/82 <br> G06F21/10 <br> G06F21/55 |
| X | US 2021/342490 A1 (BRIANCON ALAIN CHARLES [US] ET AL) 4 November 2021 (2021-11-04) <br> * figures 1-12 * <br> * paragraphs [0002] – [0005] * <br> * paragraphs [0024] – [0071] * <br> * paragraphs [0074] – [0152] * <br> * claims 1-24 * <br> ----- | 1-15 | G06F21/60 <br> H04L9/40 <br> H04W12/10 <br> H04W12/12 |
| X | CN 112 989 438 A (UNIV SHANGHAI OCEAN) 18 June 2021 (2021-06-18) <br> * paragraphs [0001] – [0083] * <br> * figures 1-4 * <br> * claims 1-8 * <br> ----- | 1-15 | |

TECHNICAL FIELDS
SEARCHED      (IPC)

G06N
G06V
G06F
H04L
H04W
G06T

The present search report has been drawn up for all claims

| Place of search | Date of completion of the search | Examiner |
|---|---|---|
| Munich | 13 February 2023 | Erdene-Ochir, O |

EPO FORM 1503 03.82 (P04C01)

## ANNEX TO THE EUROPEAN SEARCH REPORT
## ON EUROPEAN PATENT APPLICATION NO.

EP 22 19 6191

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2023

| Patent document cited in search report | | Publication date | Patent family member(s) | | Publication date |
|---|---|---|---|---|---|
| US 2022237268 | A1 | 28-07-2022 | CN | 113906426 A | 07-01-2022 |
| | | | US | 2022237268 A1 | 28-07-2022 |
| | | | WO | 2020250724 A1 | 17-12-2020 |
| US 2021342490 | A1 | 04-11-2021 | NONE | | |
| CN 112989438 | A | 18-06-2021 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61055694 B
- WO 2009140774 A
- US 7350085 B
- US 7397916 B
- US 6594761 B
- US 6842862 B
- US 6779114 B
- WO 2012126077 A
- US 7395433 B
- WO 2011120123 A
- WO 2018108275 A
- WO 2017102880 A

**Non-patent literature cited in the description**

- **S. CHOW et al.** White-Box Cryptography and an AES Implementation. *Selected Areas in Cryptography, 9th Annual International Workshop, SAC 2002, Lecture Notes in Computer Science,* 2003, vol. 2595, 250-270
- **S. CHOW et al.** A White-box DES Implementation for DRM Applications. *Digital Rights Management, ACM CCS-9 Workshop, DRM 2002, Lecture Notes in Computer Science,* 2003, vol. 2696, 1-15